(19) Europäisches Patentamt
European Patent Office
Office européen des brevets

(11) **EP 1 477 774 B1**

(12) **EUROPÄISCHE PATENTSCHRIFT**

(45) Veröffentlichungstag und Bekanntmachung des Hinweises auf die Patenterteilung:
**02.07.2008  Patentblatt 2008/27**

(51) Int Cl.:
***G01D 5/347*** *(2006.01)*

(21) Anmeldenummer: **04010151.1**

(22) Anmeldetag: **29.04.2004**

(54) **Positionsmesseinrichtung**

Position measuring device

Dispositif de mesure de position

(84) Benannte Vertragsstaaten:
**AT BE BG CH CY CZ DE DK EE ES FI FR GB GR HU IE IT LI LU MC NL PL PT RO SE SI SK TR**

(30) Priorität: **16.05.2003  DE 10323088**

(43) Veröffentlichungstag der Anmeldung:
**17.11.2004  Patentblatt 2004/47**

(73) Patentinhaber: **Dr. Johannes Heidenhain GmbH**
**83292 Traunreut (DE)**

(72) Erfinder:
• **Benner, Ulrich**
**83308 Trostberg (DE)**
• **Mayer, Elmar**
**83365 Nussdorf (DE)**
• **Holzapfel, Wolfgang**
**83119 Obing (DE)**

(56) Entgegenhaltungen:
**EP-A- 1 114 983**       **US-A- 4 112 295**
**US-A- 4 577 101**       **US-A- 4 758 720**

## Beschreibung

Die Erfindung betrifft eine Positionsmesseinrichtung nach dem Oberbegriff des Patentanspruchs 1.

Eine derartige Positionsmesseinrichtung umfasst eine Maßverkörperung, die mindestens eine entlang einer Geraden oder entlang einer gekrümmten Linie erstreckte Messteilung aufweist; eine Abtasteinrichtung zum Abtasten der Messteilung mittels einer Lichtquelle; eine Empfangseinheit der Abtasteinrichtung, mittels der von der Lichtquelle ausgesandte und durch die Messteilung modifizierte Lichtstrahlen zur Auswertung empfangbar sind; sowie eine zwischen der Maßverkörperung und der Empfangseinheit angeordnete, durch optische Linsen gebildete Linsenanordnung zur Erzeugung eines definierten Abbildes der Messteilung auf der Empfangseinheit.

Eine solche Positionsmesseinrichtung dient zur Bestimmung der Relativposition zweier zueinander beweglicher Objekte, z. B. zweier zueinander beweglicher Maschinenteile einer Werkzeugmaschine. Hierzu wird die Maßverkörperung mit dem einen und die Abtasteinrichtung mit dem anderen der beiden Objekte verbunden, so dass sich durch Abtasten der Maßverkörperung mittels der Messteilung das Ausmaß der Bewegung der beiden Objekte zueinander entlang der Erstreckungsrichtung der Messteilung (Messrichtung) bestimmten lässt. Mit sogenannten linearen Positionsmesseinrichtungen, bei denen sich die Messteilung entlang einer Geraden erstreckt, lassen sich dabei geradlinige Relativbewegungen der beiden Objekte zueinander messen, während sogenannte Winkelmesseinrichtungen zur Bestimmung der Relativposition zweier zueinander verdrehbarer Objekte dienen. Grundsätzlich kann sich die Messteilung entlang einer beliebigen Linie erstrecken, entlang der die Relativbewegung zweier zueinander beweglicher Objekte ermittelt werden soll.

Die unterschiedliche Gestaltung der Messteilung linearer Positionsmesseinrichtungen einerseits und von Positionsmesseinrichtungen zur Bestimmung einer Bewegung entlang einer gekrümmten Linie andererseits hat zur Folge, dass die Empfangseinheit (optoelektronischer Detektor), mit der die durch die Messteilung (im Auflicht- oder Durchlichtverfahren) modifizierten Lichtstrahlen zur Auswertung empfangen werden, an die Geometrie der jeweiligen Messteilung angepasst werden muss. Dies gilt insbesondere für die Gestaltung und Rasterung der strahlungsempfindlichen Oberfläche der Empfangseinheit, die in der Regel durch einen geeigneten optoelektronischen integrierten Schaltkreis (Opto-Asic) gebildet wird. Die Verwendung unterschiedlicher optoelektronischer Detektoren für unterschiedliche Geometrien der Messteilung hat eine entsprechende Erhöhung der Herstellungskosten zur Folge.

Aus der EP 0 801 724 B1 ist eine Positionsmesseinrichtung bekannt, bei der zwischen der mittels Licht abzutastenden Messteilung und dem zugeordneten optoelektronischen Detektor ein Analysegitter angeordnet ist, um aus dem durch die Messteilung modifizierten Licht ein resultierendes Streifenmuster zu erzeugen. Dieses Analysegitter ist dabei derart ausgebildet, dass aus dem von einer kreisringförmigen Messteilung modifizierten Licht ein geradlinig erstrecktes Streifenmuster erzeugt wird oder umgekehrt aus dem von einer linearen Messteilung erzeugten Lichtmuster ein kreisringförmig erstrecktes Streifenmuster gebildet wird. Hierdurch lässt sich also beispielsweise bei Abtastung einer kreisringförmigen Messteilung ein vom optoelektronischen Detektor zu empfangendes Streifenmuster erzeugen, das in gleicher Weise geradlinig erstreckt ist, wie das üblicherweise beim Abtasten einer linearen Messteilung erzeugte Streifenmuster. Hierdurch lassen sich die Streifenmuster der Winkelmesseinrichtung einerseits und der linearen Positionsmesseinrichtung andererseits unter Verwendung optoelektronischer Detektoren ein und desselben Typs auswerten.

Aus der US-PS 5,486,923 ist es bekannt, in einem Positionsmesssystem ein Beugungsgitter als Wellenfrontkorrigierende Struktur zu verwenden. Aus der US-PS 4,577,101 ist ein optoelektronisches Winkelmesssystem bekannt, bei dem eine kreisringförmige Messteilung unter Verwendung eines konischen Reflektors und einer zylindrischen Linse auf einen linearen optoelektronischen Detektor abgebildet wird.

Der Erfindung liegt das Problem zugrunde, eine Positionsmesseinrichtung der eingangs genannten Art weiter zu verbessern.

Dieses Problem wird erfindungsgemäß durch die Schaffung einer Positionsmesseinrichtung mit den Merkmalen des Patentanspruchs 1 gelöst.

Danach ist die Linsenanordnung der Positionsmesseinrichtung, die zur Erzeugung eines definierten Abbildes der Messteilung auf der Empfangseinheit dient, derart ausgebildet, dass sich das erzeugte Abbild entlang einer Linie erstreckt, deren Krümmung verschieden von der Krümmung derjenigen Linie ist, entlang der sich die Messteilung erstreckt. So kann also beispielsweise aus einer linear erstreckten Messteilung ein gekrümmtes Abbild auf der Empfangseinheit erzeugt werden oder aus einer gekrümmten Messteilung eine linear erstrecktes Abbild bzw. eine Abbildung mit einer anderen, von der erstgenannten Krümmung abweichenden Krümmung.

Die erfindungsgemäße Lösung sieht demnach die Verwendung einer Linsenanordnung zur Veränderung der Krümmung des Abbildes gegenüber der Krümmung der Messteilung (wobei in dieser allgemeinen Formulierung auch eine geradlinige Messteilung als Teilung mit unendlicher Krümmung enthalten ist) vor, um derart aus Messteilungen unterschiedlicher Krümmung ein Abbild mit ein und derselben Krümmung zu erzeugen, so dass die Abbilder unterschiedlicher Messteilungen mit ein und demselben Typus einer Empfangseinheit ausgewertet werden können.

Die erfindungsgemäße Lösung ist insbesondere geeignet für Positionsmesseinrichtungen mit linear erstreckter Messteilung (sogenannte Längenmesssysteme) bzw. Positionsmesseinrichtungen mit entlang eines Ringes, insbesondere eines Kreisringes, erstreckter Messteilung, also sogenannte Winkelmesssysteme. Letztere müssten sich dabei nicht entlang des gesamten Umfanges des Ringes bzw. Kreisringes erstrecken; vielmehr kann eine entsprechende Messteilung auch durch ein Winkelsegment gebildet werden, das sich nur entlang eines Abschnittes eines Ringes bzw. Kreisringes erstreckt.

Unabhängig davon, ob eine ringartig erstreckte Messteilung einen geschlossenen Ring oder nur einen Abschnitt eines Ringes bildet, wird eine solche Messteilung durch ringartig hintereinander angeordnete Ringsegmente gebildet, die jeweils eine definierte Ausdehnung in radialer Richtung aufweisen und deren Breite (Ausdehnung in Umfangsrichtung des Ringes) in radialer Richtung variiert, nämlich in radialer Richtung nach außen zunimmt. Zur Erstellung eines geradlinig erstreckten Abbildes einer ringartigen Messteilung müssen die durch die Linsenanordnung auf der Empfangseinheit gebildeten Abbilder der einzelnen Ringsegmente der Messteilung jeweils eine konstante Breite, d.h. eine konstante Ausdehnung entlang der linearen Erstreckungsrichtung des Abbildes aufweisen. Hierzu kann vorgesehen sein, dass der Abbildungsmaßstab der Linsenanordnung in radialer Richtung - bezogen auf die Mittelachse des Ringes, entlang dessen sich die Messteilung voll umfänglich oder nur abschnittsweise erstreckt - variiert, und zwar in radialer Richtung von innen nach außen von einem Wert größer 1 auf einen Wert kleiner 1 abnimmt. Dies lässt sich z.B. dadurch erreichen, dass sich der Abbildungsmaßstab umgekehrt proportional zu dem Abstand eines Punktes der Messteilung von der Mittelachse der Messteilung verhält. Letzteres wird wiederum dadurch ermöglicht, dass die Brennweite der einzelnen Linsen der Linsenanordnung in radialer Richtung, bezogen auf die Mittelachse der Messteilung, variiert.

Ferner ist die Linsenanordnung zur Ausführung einer solchen Transformation ausgebildet, dass die Abbilder der Ringsegmente ohne Überlappung und vorzugsweise unmittelbar aneinander grenzend hintereinander angeordnet sind.

Umgekehrt kann aus einer linear erstreckten Messteilung, die durch entlang einer Geraden hintereinander angeordnete Striche (Segmente konstanter Breite) gebildet wird, ein gekrümmtes, ringartiges Abbild erzeugt werden, indem der Abbildungsmaßstab einer ringartigen Linsenanordnung in radialer Richtung, bezogen auf die Mittelachse der Linsenanordnung variiert, insbesondere von einem Wert kleiner 1 in radialer Richtung nach außen auf einen Wert größer 1 zunimmt.

Für die Erzeugung von Abbildern der vorgenannten Art aus einer Messteilung eignet sich insbesondere eine Linsenanordnung, die zwei Gruppen von Linsen umfasst, welche in jeweils einer von zwei parallel zueinander erstreckten Ebenen angeordnet sind, wobei die Ebenen derart ausgerichtet sind, dass die durch die Messteilung modifizierten Lichtstrahlen die Ebenen schneiden.

Hierbei sind die Linsen der beiden Gruppen jeweils paarweise zu einer Zelle zusammengefasst und die Linsen einer Zelle jeweils senkrecht zu den beiden Ebenen derart hintereinander angeordnet, dass zumindest ein Teil der Lichtstrahlen, die eine erste Linse einer Zelle passieren, anschließend zu der zweiten Linse derselben Zelle gelangen und nicht zu einer zweiten Linse einer anderen Zelle der Linsenanordnung. Hierdurch soll ein Übersprechen zwischen verschiedenen Zellen der Linsenanordnung verhindert werden.

Zur Vermeidung des Übersprechens kann alternativ oder ergänzend eine Blendenstruktur dienen, die zwischen den beiden Linsengruppen oder in der Ebene derjenigen Linsengruppe, die die Lichtstrahlen zuletzt passieren, angeordnet ist. Hierbei kann insbesondere jeder Zelle der Linsenanordnung eine Öffnung der Blendenstruktur zugeordnet sein. Mittels einer solchen Blendenstruktur können die Lichtstrahlen derart geführt werden, dass solche Lichtstrahlen, die eine erste Linse einer Zelle der Linsenanordnung passiert haben, nicht zu einer zweiten Linse einer anderen Zelle der Linsenanordnung gelangen.

Die beiden Linsengruppen sind vorzugsweise jeweils parallel zu der Maßverkörperung und parallel zu der lichtempfindlichen Oberfläche der Abtasteinrichtung angeordnet. Sie bestehen vorzugsweise jeweils aus ringartig hintereinander angeordneten (ringsegmentartigen) Linsen, wobei die Mittelpunkte der beiden Linsengruppen auf einer Geraden (gemeinsamen Achse) oder auf einem Kreissegment liegen.

Ferner kann vorgesehen sein, dass die Linsen-Mittelpunkte der einzelnen Linsen der beiden Linsengruppen in einem zweidimensionalen Raster, bestehend aus mehreren Zeilen, angeordnet sind, oder dass die Linsen-Mittelpunkte jeweils entlang mehrerer konzentrischer Kreislinien mit unterschiedlichen Radien liegen.

Hierbei können die Zeilen des zweidimensionalen Rasters im Wesentlichen parallel zur Erstreckungsrichtung der Messteilung verlaufen und die verschiedenen Zeilen in der Erstreckungsrichtung der Messteilung zueinander versetzt angeordnet sein und darüber hinaus die Mittelpunkte der verschiedenen Kreislinien in azimutaler Richtung versetzt zueinander angeordnet sein.

Die Linsen selbst sind vorzugsweise lokal als Zylinderlinsen mit einer definiert orientierten Scheitellinie ausgebildet; insbesondere kann es sich hierbei um zylindersymmetrische Linsen handeln.

Gemäß einer bevorzugten Ausführungsform der Erfindung sind die einzelnen Linsen einer Gruppe der Linsenanordnung jeweils senkrecht zur Erstreckungsebene der jeweiligen Linsengruppe gewölbt, wobei sich die Scheitellinien der Linsen in radialer Richtung erstrecken und in einem Punkt schneiden.

Die Schnittpunkte der Scheitellinien der beiden Linsengruppen können dabei in radialer Richtung derart voneinander beabstandet sein, dass in einer Zelle der Linsenanordnung die Scheitellinien der beiden Linsen dieser Zelle - entlang der optischen Achse betrachtet - jeweils deckungsgleich hintereinander liegen und dass in den weiteren Zellen der Linsenanordnung die Scheitellinien der beiden Linsen jeweils senkrecht zur optischen Achse zueinander versetzt sind. Hierdurch können die einzelnen Ringsegmente einer ringartigen Messteilung, die aufgrund des gewählten, ortsabhängigen Abbildungsmaßstabes in rechteckige Segmente konstanter Breite umgesetzt werden, in der ersten Bildebene ohne Überlapp entlang einer Geraden hintereinander angeordnet werden.

Hierzu ist weiter vorgesehen, dass sich die zueinander versetzten Scheitellinien der Linsen einer Zelle - entlang der optischen Achse betrachtet - kreuzen, und zwar derart, dass die Schnittpunkte der Scheitellinien der ersten Linsengruppe sowie der zweiten Linsengruppe in radialer Richtung zueinander versetzt sind. Gleichzeitig sind die seitlichen Begrenzungslinien, die die einzelnen Linsen einer ringartigen Linsengruppe in Umfangsrichtung begrenzen - entlang der optischen Achse betrachtet - für die beiden Linsen einer Zelle deckungsgleich angeordnet, so dass die beiden Linsen einer Zelle - entlang der optischen Achse betrachtet - im Wesentlichen deckungsgleich sind.

Als optische Linsen können sowohl diffraktive Linsen (auch in Form einer mehrstufigen diffraktiven Struktur) als auch refraktive Linsen dienen.

Die erfindungsgemäße Ausbildung einer Positionsmesseinrichtung lässt sich sowohl bei solchen Messteilungen anwenden, die in einem Auflichtverfahren abtastbar sind, als auch bei in einem Durchlichtverfahren abtastbaren Messteilungen. Außerdem kann die erfindungsgemäße Ausbildung einer Positionsmesseinrichtung sowohl bei absoluten Messsystemen (Maßverkörperung mit einer absoluten Codespur) als auch bei inkrementellen Messsystemen (Maßverkörperung mit einer periodischen Messteilung) angewandt werden.

Die Maßverkörperung kann mehrere senkrecht zu ihrer Erstreckungsrichtung nebeneinander angeordnete Spuren aufweisen, die zur Positionsmessung mittels Licht abtastbar sind. Dabei kann zumindest ein Teil der Spuren durch eine gemeinsame Linsenanordnung abbildbar sein und/oder es kann zumindest ein Teil der Spuren durch separate Linsenanordnungen abbildbar sein. Dabei können die beiden Linsengruppen jeder Linsenanordnung jeweils auf einem gemeinsamen Substrat angeordnet sein.

Weitere Merkmale und Vorteile der Erfindung werden bei der nachfolgenden Beschreibung von Ausführungsbeispielen anhand der Figuren deutlich werden.

Es zeigen:

Figur 1 - einen Querschnitt einer Positionsmesseinrichtung für die Winkelmessung, die eine im Durchlichtverfahren optisch abtastbare, ringförmig erstreckte Codespur aufweist sowie eine Linsenanordnung zur Abbildung des durch die Codespur modifizierten Lichtes auf einem optoelektronischen Detektor;

Figur 2a - ein Ringsegment der Codespur aus Figur 1 sowie das Abbild dieses Ringsegmentes;

Figur 2b - eine weitere Darstellung des Ringsegmentes aus Figur 1 sowie von dessen Abbild;

Figur 3a - mehrere, entlang eines Kreisringes nebeneinander angeordnete Ringsegmente der Codespur aus Figur 1;

Figur 3b-3d - Transformationsschritte bei der Erzeugung eines Abbildes der Anordnung aus Figur 3a, wobei das Abbild durch linear hintereinander angeordnete Segmente konstanter Breite gebildet wird;

Figur 4a - eine Draufsicht auf eine Linsengruppe der Linsenanordnung aus Figur 1;

Figur 4b - einen Schnitt durch die Linsenanordnung aus Figur 1;

Figur 5 - einen Ausschnitt aus einer Linsengruppe der Linsenanordnung aus Figur 1 mit einer Blendenstruktur;

Figur 6 - einen Ausschnitt aus einer Weiterbildung der Linsenanordnung gemäß Figur 1;

Figur 7 - eine Positionsmesseinrichtung zur Abtastung einer Messteilung im Auflichtverfahren;

Figur 8 - eine Abwandlung der Transformation aus Figur 2a.

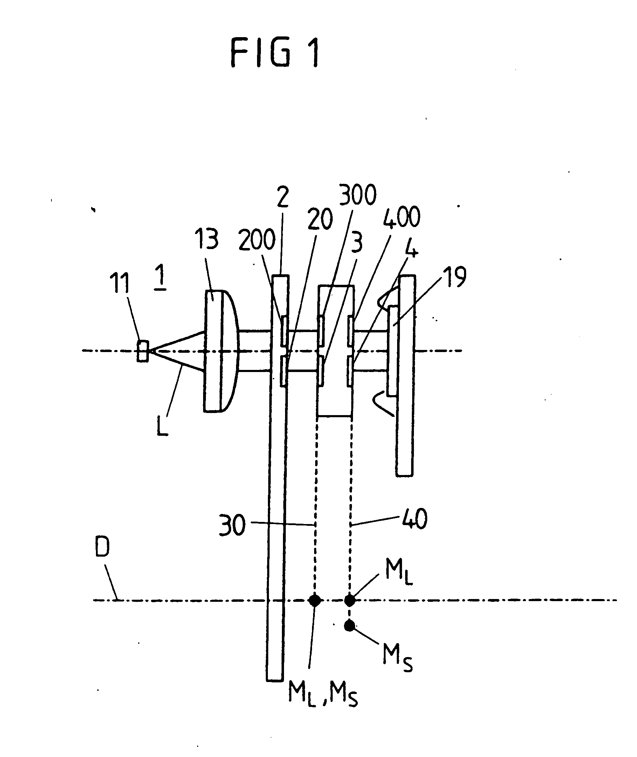

Figur 1 zeigt ein Positionsmesssystem für Winkelmessungen (d.h. eine Winkelmesseinrichtung bzw. einen Drehgeber) mit einer Maßverkörperung 2 und einer entlang der Messrichtung, d.h. entlang eines Kreisringes, relativ zu der Maßverkörperung 2 beweglichen Abtasteinheit 1 zum Abtasten der Maßverkörperung 2. Die Maßverkörperung 2 ist hier als Teilscheibe eines absoluten Drehgebers ausgebildet und weist eine Messteilung in Form einer Codespur 20 mit absoluter Positionsinformation (PRC-Spur) auf, die sich kreisringförmig auf der Maßverkörperung 2 um die Drehachse D für die Relativbewegung von Abtasteinheit 1 und Maßverkörperung 2 erstreckt.

In radialer Richtung betrachtet ist neben der Codespur 20 mit absoluter Positionsinformation eine Inkrementalspur 200 vorgesehen, die sich ebenfalls ringförmig um die Drehachse D der Positionsmesseinrichtung erstreckt und die durch eine periodische Strichteilung gebildet wird. Bei Bedarf kann die Maßverkörperung 2 noch weitere Spuren aufweisen.

Die zum Abtasten der beiden Spuren 20, 200 der Maßverkörperung 2 im Durchlichtverfahren dienende Abtasteinheit 1 weist eine Lichtquelle in Form einer lichtemittierenden Diode sowie auf der der Lichtquelle abgewandten Seite der Maßverkörperung 2 einen fotoelektrischen Detektor 19 auf. Zwischen der Lichtquelle 11 und der Maßverkörperung 2 ist eine Kondensorlinse 13 angeordnet, die die von der Lichtquelle 11 ausgesandten Lichtstrahleh L parallelisiert, bevor sie auf die Maßverkörperung 2 auftreffen. Auf der anderen Seite der Maßverkörperung 2 sind zwischen der Maßverkörperung 2 und dem fotoelektrischen Detektor 19 zwei Linsenanordnungen 3, 4 und 300, 400 angeordnet, die zur Erzeugung eines Abbildes der durch die Codespur 20 bzw. durch die Inkrementalspur 200 modifizierten Lichtstrahlen L auf dem fotoelektrischen Detektor 19 dienen.

Bei dem gemäß Figur 1 im Durchlichtverfahren arbeitenden Positionsmesssystem wird das von der Lichtquelle 11 ausgesandte und mittels der Kondensorlinse 13 parallelisierte Licht beim Durchdringen der lichtdurchlässigen Maßverkörperung 2 durch die Codespur 20 oder durch die Inkrementalspur 200 modifiziert, wobei ein definiertes Lichtmuster erzeugt wird. Das durch die Codespur 2 oder durch die Inkrementalspur 200 modifizierte Licht gelangt anschließend zu der ersten Linsenanordnung 3, 4 bzw. der zweiten Linsenanordnung 300, 400, die auf einem gemeinsamen Substrat angeordnet sind. Die Linsenanordnungen 3, 4 werden jeweils durch zwei Gruppen von Linsen gebildet, welche in jeweils einer von zwei parallel zueinander verlaufenden Ebenen 30, 40 angeordnet sind. Jede der Linsengruppen 3 bzw. 4 oder 300 bzw. 400 besteht aus einer Mehrzahl in der jeweiligen Ebene 30 bzw. 40 nebeneinander angeordneter Linsen (sogenanntes Mikrolinsen-Array). Die Ebenen, in denen sich die Linsengruppen 3, 4 bzw. 300, 400 der beiden Linsenanordnungen erstrecken, sind derart angeordnet, dass sie von den an der Maßverkörperung 2 modifizierten Lichtstrahlen L im Wesentlichen senkrecht geschnitten werden.

Bei einem derartigen doppelten Linsen-Array, das aus zwei in einem definierten Abstand voneinander und parallel zueinander angeordneten Linsengruppen 3, 4 bzw. 300, 400 besteht, kann jeder Einzellinse einer ersten Linsengruppe 3 bzw. 300 genau eine Einzellinse der zweiten Linsengruppe 4 bzw. 400 zugeordnet werden. Dadurch lässt sich mit Linsen ohne Wellenleiterstruktur ein positiver Abbildungsmaßstab, d.h. ein Abbildungsmaßstab mit einem Wert größer als Null, insbesondere dem Wert Eins, realisieren. Ein solcher Abbildungsmaßstab ermöglicht es wiederum, die Bildbereiche der Einzellinsen mit einer definierten räumlichen Orientierung kontinuierlich aneinahder anzuschließen. Dies ermöglicht eine großflächige Abtastung der Maßverkörperung 2 bei gleichzeitig geringer Bauhöhe und somit kompakter Ausbildung des Positionsmesssystems.

Besonders vorteilhaft ist hierbei eine derartige Ausbildung der Linsenanordnung, dass der Abbildungsmaßstab im Mittel den Wert Eins annimmt. Indem für beide Linsengruppen 3, 4 bzw. 300, 400 der jeweiligen Linsenanordnung das gleiche Raster, d.h., eine übereinstimmende Anordnung der Einzellinsen in der jeweiligen Ebene 30, 40 verwendet wird, gehen die (entsprechend gerasterten) Bildbereiche des von der Linsenanordnung 3, 4 auf dem Detektor 19 erzeugten Abbildes unmittelbar kontinuierlich ineinander über.

Eine Besonderheit bei der in Figur 1 dargestellten Positionsmesseinrichtung besteht darin, dass der photoelektrische Detektor 19 keine kreisringförmig strukturierte Oberfläche aufweist, sondern vielmehr eine linear, geradlinig strukturierte Sensorfläche, wie sie bei so genannten Längenmesssystemen, d.h. bei Positionsmesssystemen mit einer linear erstreckten Messteilung (in Form einer Codespur oder einer Inkrementalspur) verwendet wird. D.h., der photoelektrische Detektor 19 wird durch einen Opto-ASIC gebildet, der mit seiner linear strukturierten Oberfläche primär für den Einsatz bei Längenmesssystemen vorgesehen ist. Indem ein solcher ASIC zusätzlich auch bei Winkelmesssystemen bzw. Drehgebern verwendet wird, kann dieser entsprechend kostengünstig in größeren Stückzahlen hergestellt werden. Dies reduziert die Herstellungskosten für Positionsmesssysteme.

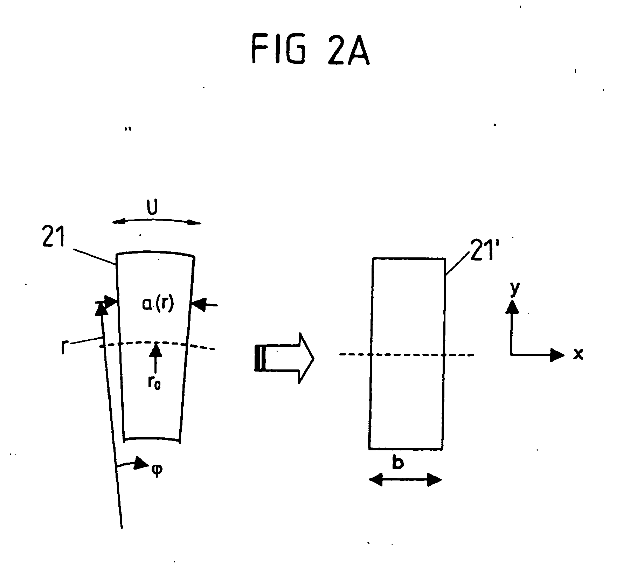

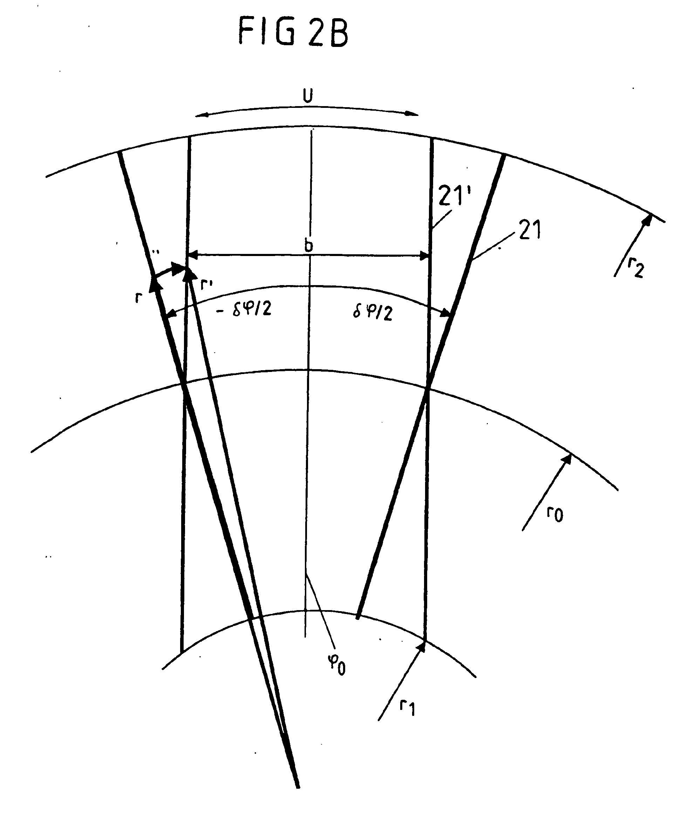

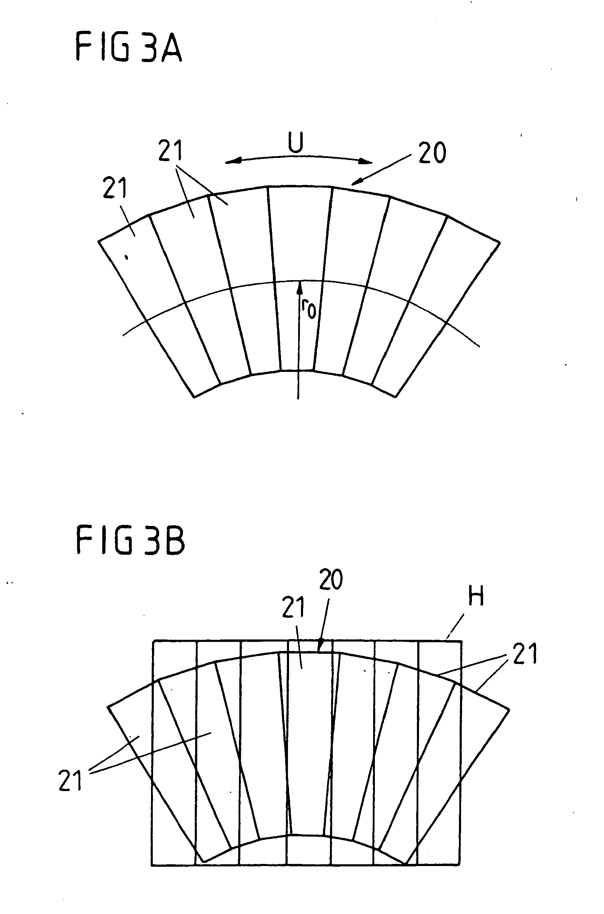

Zur Verwendung eines linear strukturierten photoelektrischen Detektors 19 bei einem Positionsmesssystem für die Winkelmessung gemäß Figur 1 ist es erforderlich, aus dem durch die kreisringförmige Codespur 20 bzw. die kreisringförmige Inkrementalspur 200 gebildeten Lichtmuster ein geradlinig erstrecktes Abbild auf dem photoelektrischen Detektor 19 zu erzeugen, wie nachfolgend anhand der Figuren 2a und 2b sowie der Figuren 3a und bis 3d dargelegt werden wird. Hierzu dient eine geeigneten Ausbildung der Linsenanordnungen 3, 4 bzw. 300, 400.

Figur 2a zeigt ein Ringsegment 21, der ringförmigen Codespur 20 aus Figur 1. Zur Bildung einer ringförmigen Codespur 20 ist die Ausdehnung a(r) jedes Ringsegments 21 in Umfangsrichtung U der Codespur 20 abhängig von dem Abstand r von der Drehachse D der Positionsmesseinrichtung.

Zur Erzeugung eines linear erstreckten Abbildes aus einer aus Ringsegmenten 21 gemäß Figur 2a bestehenden Codespur 20 müssen die einzelnen Ringsegmente 21 in rechteckförmige Abbilder 21' mit ortsunabhängiger Breite b überführt werden, wie in Figur 2a dargestellt. Dabei wird der Abbildungsmaßstab so gewählt, dass die Breite b des rechteckförmigen Abbildes 21' eines Ringsegmentes 21 der Breite $a(r_0)$ des Ringsegmentes bei dem Radius $r_0$ entspricht, der in radialer Richtung r betrachtet die Mitte des Ringsegmentes 20 angibt. Mit anderen Worten ausgedrückt ist der

Wert $r_0$ so gewählt, dass von dem Wert $r_0$ ausgehend die Ringsegmente 21 sich in radialer Richtung um den gleichen Betrag nach außen und nach innen (d.h. weg von der Drehachse D bzw. hin zu der Drehachse D) erstrecken. Die Punkte mit dem Abstand $r_0$ von der Drehachse D bezeichnen somit die gekrümmte Mittellinie der Ringsegmente 21 und damit der ringförmigen Codespur 20 insgesamt.

Zur Schaffung eines rechteckförmigen Abbildes 21' aus einem Ringsegment 21 gemäß Figur 2a ist wird vorliegend eine Abbildung herangezogen, bei der die Bereiche des Ringsegmentes 21, die innerhalb der durch den mittleren Radiuswert $r_0$ definierten Mittellinie liegen, verbreitert werden, während diejenigen Bereiche des jeweiligen Ringsegmentes 21, die außerhalb der durch den mittleren Radius $r_0$ definierten Mittellinie liegen, in ihrer Ausdehnung $a(r)$ reduziert werden. Auf der durch den mittleren Radius $r_0$ definierten Mittellinie selbst soll die Ausdehnung $a(r_0)$ des Ringsegmentes 21 bei der Transformation unverändert bleiben, d.h. sie soll der Breite b des bei der Transformation erzeugten, rechteckförmigen Abbildes 21' entsprechen. Dies entspricht einer Abbildung mit einem radiusabhängigen Maßstab, der radiusabhängig um einen mittleren Wert 1 schwankt. Speziell für die Transformation der Ringsegmente eines Kreisringes auf ein rechteckförmiges Abbild eignet sich der Abbildungsmaßstab $\beta(r) = r_0/r$. Selbstverständlich kann auch eine andere Bezugslinie als die durch den mittleren Radius $r_0$ definierte Mittellinie für die Transformation verwendet werden. Nachfolgend wird jedoch weiterhin beispielhaft von dem mittlere Radius $r_0$ des Ringsegmentes 21 als Bezugspunkt ausgegangen werden.

Die tatsächliche, radiusabhängige Variation des Abbildungsmaßstabes $\beta(r)$ ist in der Praxis sehr klein. Bei einem typischen Spurradius (entsprechend dem mittleren Abstand $r_0$ der Ringsegmente 21 von der Drehachse D) von $r_0 = 20$ mm und einer Spurhöhe (entsprechend der radialen Ausdehnung der Ringsegmente 21) von 1 mm variiert der Abbildungsmaßstab $\beta(r)$ zwischen 0.975 und 1.025.

Figur 2b zeigt nochmals ein Ringsegment 21, das sich in radialer Richtung r von einem inneren Radius $r_1$ bis zu einem äußeren Radius $r_2$ erstreckt und einen mittleren Radius $r_0$ aufweist und das im Umfangsrichtung U des entsprechenden Kreisringes eine variable, radiusabhängige Breite aufweist. Alle Punkte dieses Ringsegmentes 21 lassen sich beschreiben durch einen Ortsvektor $r = r(r, \varphi)$, d.h. jeder Ortsvektor r eines Kreissegmentes 21 wird dargestellt durch den Radius r sowie die Winkellage $\varphi$ des jeweiligen Punktes. Bezeichnet man mit $\varphi_0$ denjenigen Winkel, auf dem die in radialer Richtung verlaufende Winkelhalbierende des Ringsegmentes 21 liegt (d.h., dass sich das Ringsegment 21 von dieser Winkelhalbierenden aus in Umfangsrichtung U sowohl im Uhrzeigersinn als auch entgegen dem Uhrzeigersinn jeweils um einen identischen Betrag $\delta\varphi/2$ erstreckt), so lässt sich jeder Ortsvektor r wie folgt schreiben:

$$r = r(r,\varphi) = r(r,\varphi - \varphi_0 + \varphi_0).$$

Zur Abbildung eines Ringsegmentes 21, das durch die oben angegebenen Ortsvektoren r beschrieben wird, auf ein rechteckförmiges Abbild 21' mit konstanter Breite b müssen alle Punkte des Ringsegmentes 21, die jeweils in radialer Richtung verlaufen, in zwei parallele Begrenzungslinien mit konstantem Abstand b überführt werden. Eine entsprechende Transformation von einem Punkt r des Ringsegmentes 21 auf einen Punkt r' des rechteckförmigen Abbildes 21' ist in Figur 2b dargestellt. Diese Transformation lässt sich formulieren als

$$r(r, \varphi) = r(r, \varphi - \varphi_0 + \varphi_0) \rightarrow r'(r,\varphi) = r(r, (\varphi - \varphi_0) * (r_0/r) + \varphi_0)$$

Hierbei bezeichnen r und $\varphi$ die Koordinaten eines jeweiligen Punktes r oder r' des Ringsegmentes 21 bzw. des Abbildes 21' und $\varphi_0$ bezeichnet die Winkellage der radial erstreckten Mittellinie sowohl des Ringsegmentes 21 als auch des Abbildes 21', d.h. die Winkelhalbierende bleibt bei der Transformation unverändert, ebenso wie die Punkte r mit dem mittleren Radiuswert $r = r_0$.

Die Transformation findet unter Erhaltung des Radiuswertes r statt, erfolgt also tangential, indem Winkel, die im Ringsegment 21 $(\varphi - \varphi_0)$ betrugen, beim Radiuswert r auf Winkelwerte vom Betrage $(\varphi - \varphi_0) * (r_0/r)$ im Abbild 21' verkleinert/vergrößert werden, je nachdem, ob $r > r_0$ oder $r < r_0$ ist.

Mit $(\varphi - \varphi_0) = \pm \delta\varphi/2$ könnte man auch schreiben:

$$r(r, \delta\varphi/2) = r(r, \pm \delta\varphi/2 + \varphi_0) \rightarrow r'(r, \delta\varphi/2) = r(r,(\pm \delta\varphi/2) * (r_0/r) + \varphi_0)$$

In sämtlichen Figuren sind die Vektorpfeile der Vektoren r, r' usw. aus Gründen der Übersichtlichkeit nicht bis zur Drehachse D der Positionsmesseinrichtung durchgezogen. Ausgangspunkt der Vektoren soll aber in jedem Falle diese Drehachse D sein.

Jeder Ortsvektor R des Ringsegmentes wird also dargestellt durch die Koordinaten r und φ, wobei r den radialen Abstand des jeweiligen Punktes von der Drehachse D der Positionsmesseinrichtung angibt und φ den Winkel in Umfangsrichtung bezeichnet.

Anhand der Figuren 2a und 2b wurde zunächst eine Transformation erläutert, der jedes einzelne Ringsegment 21 der Codespur 20 unterzogen werden muss, um aus der kreisringförmig erstreckten Codespur 20 ein linear erstrecktes Abbild auf dem fotoelektrischen Detektor 19 (vgl. Figur 1) zu erzeugen. Die Transformation der einzelnen Ringsegmente 21 in rechteckförmige Abbilder 21' genügt jedoch noch nicht zur Erzeugung eines linear erstreckten Abbildes der Codespur 20 insgesamt. Hierzu ist es ferner erforderlich, die einzelnen rechteckförmigen Abbilder 21' derart linear hintereinander anzuordnen, dass sie ohne Überlapp aneinander anschließen. Dies wird nachfolgend anhand der Figuren 3a bis 3d erläutert.

Figur 3a zeigt mehrere Ringsegmente 21 der Codespur 20, die in Umfangsrichtung U der Codespur hintereinander angeordnet sind und die jeweils die anhand der Figuren 2a und 2b erläuterte Geometrie aufweisen. Figur 3b zeigt nochmals die Ringsegmente 21 aus Figur 3a, und zwar vor einem Hintergrundraster H mit rechteckförmigen Rastabschnitten konstanter Breite, in denen die einzelnen Ringsegmente 21' zur Erzeugung der gewünschten, rechteckförmigen Abbilder 21' angeordnet werden müssen. Die Breite der einzelnen Rastabschnitte der Hintergrundrasterung H ist dabei so gewählt, dass sie der Breite b der Ringsegmente 21 auf der Höhe der Spurradius $r_0$ entsprechen, entsprechend der anhand Figur 2b bereits erläuterten Zuordnung $b = a (r_0)$.

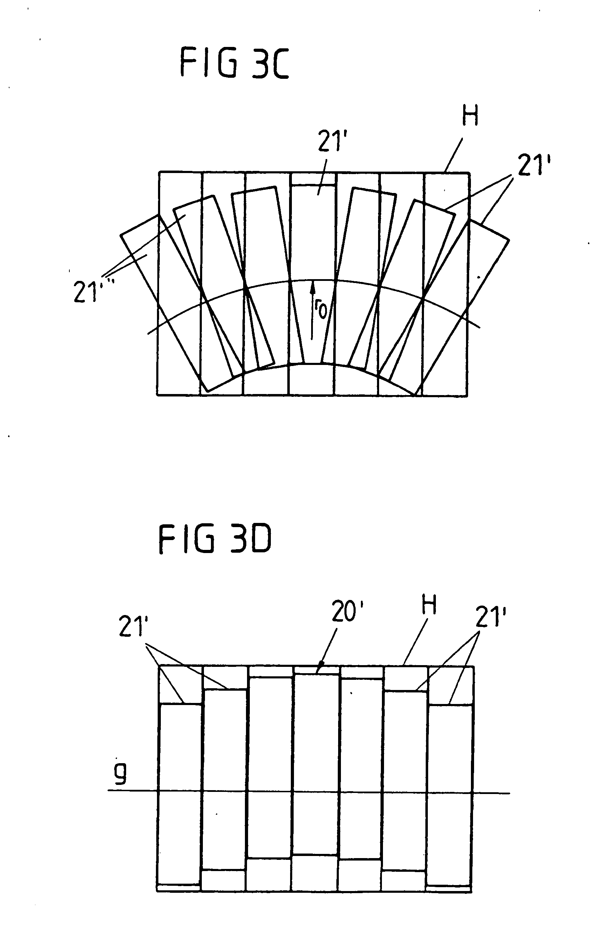

Figur 3c zeigt die Abbilder 21' der Ringsegmente 21 vor dem Hintergrundraster H, die durch eine Transformation der einzelnen Ringsegmente 21 in rechteckförmige Abbilder 21' erzeugt worden sind. Anhand Figur 3c wird deutlich, dass die gemäß Figuren 2a und 2b durch Transformation aus den einzelnen Ringsegmenten 21 erzeugten Abbilder 21' nicht linear hintereinander, sondern winklig zueinander angeordnet sind und sich entlang des Spurradius $r_0$ schneiden. Benachbarte rechteckförmige Abbilder 21' sind jeweils um einen Winkel δφ zueinander verkippt, der der Winkelerstreckung der einzelnen Ringsegmente 21 in Umfangsrichtung U entspricht, vgl. Figur 2b.

Die Aufgabe besteht nur darin, die rechteckförmigen Abbilder 21' derart zu verkippen, dass sie anschließend in dem Hintergrundraster H entlang einer Geraden G geradlinig hintereinander angeordnet sind, vgl. Figur 3d. Hierzu wird eines der rechteckförmigen Abbilder 21' als zentrales, unverkipptes Rechteck definiert und alle anderen rechteckförmigen Abbilder 21' müssen um ein Vielfaches des Kippwinkels δφ um ihren jeweiligen Schwerpunkt derart verkippt werden, dass sie parallel zu dem als unverkippt definierten zentralen Abbild erstreckt sind.

In den Figuren 3a bis 3d wurden die Erzeugung rechteckförmiger Abbilder 21' aus den Ringsegmenten 21 und das anschließende Verkippen der Abbilder 21' zur Erzeugung einer linearen Anordnung entlang einer Geraden G als zwei separate, hintereinander ablaufende Transformationsschritte dargestellt. Eine solche Transformation wird nachfolgend näher erläutert werden. Es ist jedoch ebenso möglich, eine Transformation von einer ringartigen Codespur 20 zu einem linear erstreckten Abbild 20' zu wählen, bei der die Bildung rechteckförmiger Abbilder 21' und die lineare Anordnung der Abbilder 21' hintereinander nicht durch separate Transformationsschritte erzeugt werden, sondern vielmehr unmittelbar zusammenhängen. Dies resultiert aus der Freiheit bei der Wahl der Abbildung, die von der ringförmigen Codespur 20 zu dem linear erstreckten Abbild 20' führt.

Für die gesamte Abbildung, die aus der ringartigen Codespur 20 das längserstreckte Abbild 20' erzeugt, gilt, dass der Abbildungsmaßstab $β(r) = r_0/r$ sein soll. Denn nur mit diesem Abbildungsmaßstab wird die gewünschte Erzeugung rechteckförmiger Abbilder 21' aus den einzelnen Ringsegmenten 21 der Codespur 20 erreicht. Der Abbildungsmaßstab $β(r)$ setzt sich multiplikativ zusammen aus den Abbildungsmaßstäben $β_1(r)$ und $β_2(r)$ der ersten bzw. zweiten Linsengruppe 3 bzw. 4 der der Codespur zugeordneten Linsenanordnung. Es gibt offensichtlich eine Vielzahl von Möglichkeiten, um durch multiplikative Verknüpfung der Abbildungsmaßstäbe $β_1(r)$ und $β_2(r)$ zweier Abbildungen den Abbildungsmaßstab $β(r) = r_0/r$ einer Gesamtabbildung zu erhalten. Im Sinne des anhand der Figuren 3a bis 3d beschriebenen Ausführungsbeispiels sei nachfolgend $β_2(r) = -1$ und dementsprechend $β_1(r) = -r_0/r$. Demnach wird aus den einzelnen Segmenten 21 der ringförmigen Codespur 20 schon bei der ersten Abbildung mittels der hierfür vorgesehenen, in einer Ebene 30 angeordneten Linsengruppe 3 aus jedem Ringsegment 21 ein rechteckförmiges Abbild 21' erzeugt, entsprechend den Figuren 3b und 3c. Es besteht dann jedoch die anhand Figur 3c erläuterte Verkippung der Abbilder 21' zueinander, die sich für jedes rechteckförmige Abbild 21' als ein ganzzahliges Vielfaches des vorstehend definierten Winkels δφ bezüglich eines zentralen Referenzabbildes 21' darstellen lässt. Dabei hat der n-te Nachbar des als unverkippt definierten Abbildes 21' gegenüber diesem jeweils den Kippwinkel n*δφ.

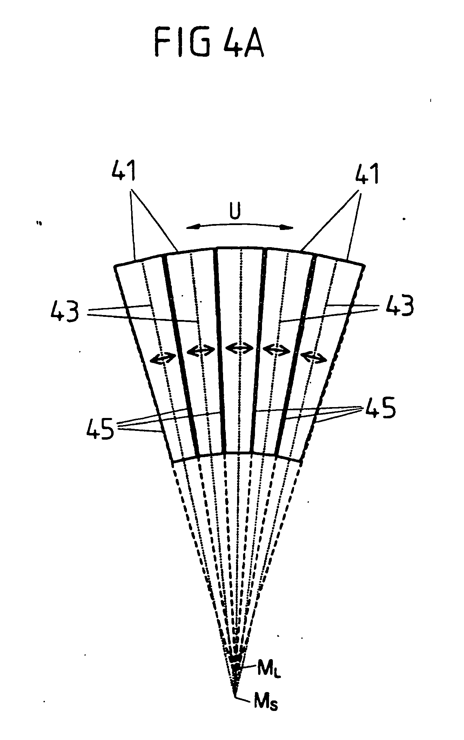

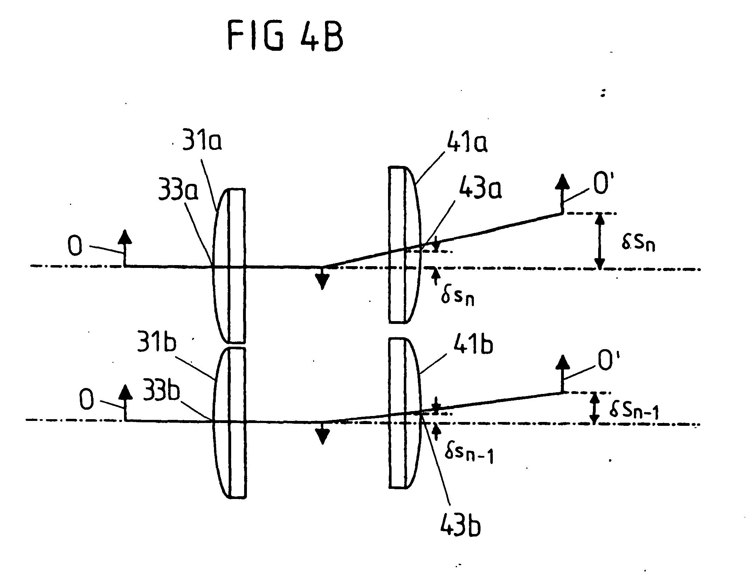

Damit die zweite Abbildung den Kippwinkel jedes rechteckförmigen Abbildes 21' auf den Wert Null korrigiert, müssen die Scheitellinien der Linsen der zweiten Linsengruppe 4 definierte Bedingungen erfüllen, die nachfolgend anhand der Figuren 4a und 4b näher erläutert werden.

Ausgangspunkt für die nachfolgenden Ausführungen unter ergänzender Bezugnahme auf die Figuren 4a und 4b ist das Problem, wie die einzelnen Linsen der beiden Linsengruppen 3, 4 der der Codespur 20 zugeordneten Linsenanordnung ausgebildet sein müssen und wie diese Linsen in der jeweiligen Ebene 30 bzw. 40 zu einer Gruppe zusammengefasst sein müssen, damit die vorstehend erläuterte Abbildung einer ringförmig erstreckten Codespur 20 auf ein linear erstrecktes Abbild 20' durchgeführt werden kann.

Wie bereits anhand der Figur 1 erläutert, wird zur Abbildung der Codespur 20 auf den fotoelektrischen Detektor 19 eine Linsenanordnung 3, 4 verwendet, die aus zwei in jeweils einer Ebene 30 bzw. 40 angeordneten Linsengruppen (Mikrolinsen-Arrays) besteht, die vorzugsweise senkrecht zur optischen Achse ausgerichtet sind und sich sowohl parallel zu dem Codeträger 2 als auch parallel zu der strahlungsempfindlichen Oberfläche des fotoelektrischen Detektors 19 erstrecken. Diese parallele Anordnung der einzelnen Bestandteile der Positionsmesseinrichtung erleichtert die Montage. Bei einer derartigen Anordnung muss zur Erzielung des gewünschten Abbildungsmaßstabes $\beta(r) = r_0/r$ mittels der bekannten, paraxialen Abbildungsgleichungen die Ortsabhängigkeit der Brennweiten $f_1$ und $f_2$ der ersten und zweiten Abbildung bzw. der ersten Linsengruppe 3 und der zweiten Linsengruppe 4 bestimmt werden, d.h., $f_1 = f_1(r)$ und $f_2 = f_2$ (r). Sofern der ortsabhängige Abbildungsmaßstab, wie vorstehend erläutert, insbesondere mittels der ersten Abbildung realisiert wird, ist die Abhängigkeit vom Radius r (d.h. dem Abstand von der Drehachse D) insbesondere bei der Brennweite $f_1$ der ersten Abbildung zu berücksichtigen.

Vorzugsweise erfolgt eine Abbildung der Strukturen der Maßverkörperung 2 nur in Teilungsrichtung, d.h. in Erstreckungsrichtung der Messteilung, also in Umfangsrichtung U; und in radialer Richtung r wird statt dessen eine Schattenprojektion verwendet. Die verwendeten Linsen 41 ähneln dann Zylinderlinsen, deren abbildende Achsen in Umfangsrichtung U orientiert sind, vgl. die Darstellung eines Ausschnittes der zweiten Linsengruppe 4 in Figur 4a. Die Linsen 41 besitzen eine vom Radius r abhängige Brennweite $f_2$ und werden vorliegend als modifizierte Zylinderlinsen bezeichnet. Wie anhand Figur 4a deutlich wird, sind die einzelnen Linsen 43 jeweils als Ringsegmente ausgebildet und entlang einer Umfangsrichtung U hintereinander angeordnet. Anstelle im wesentlichen zylinderförmiger Linsen können z.B. auch in der Draufsicht im wesentlichen rechteckförmige, elliptische oder radialsymmetrisch ausgebildete Linsen verwendet werde

Die abbildenden Richtungen der Linsen 41 sind in Figur 4a durch Pfeile angedeutet. Die Scheitellinien 43 der zylinderartig aus der Ebene herausgewölbten Linsen 41 verlaufen senkrecht zu der Abbildungsrichtung und treffen sich in einem gemeinsamen Schnittpunkt $M_s$, der außerhalb der Drehachse D bzw. Mittelachse der Positionsmesseinrichtung liegt, vgl. Figur 1. Die radialen Begrenzungslinien 45 der einzelnen Linsen 41 treffen sich ebenfalls in einem gemeinsamen Mittelpunkt $M_L$, wobei dieser Schnittpunkt $M_L$ mit der Drehachse D zusammenfällt, vergleiche Figur 1.

Die Linsen der ersten Linsengruppe 3 der Linsenanordnung 3, 4 sind in der zugehörigen Ebene 30 in entsprechender Weise ausgebildet und angeordnet wie die Linsen 41 der zweiten Linsengruppe 4. Es handelt sich also ebenfalls um modifizierte Zylinderlinsen, die jeweils ringsegmentartig ausgebildet und entlang einer Umfangsrichtung U nebeneinander angeordnet sind. Der wesentliche Unterschied besteht darin, dass gemäß dem vorliegenden Ausführungsbeispiel sich bei der ersten Linsengruppe 3 die Scheibenlinien der Linsen sowie die Linsenbegrenzungslinien (Übergangslinien von der einen Linse zur nächsten) in ein und demselben Punkt $M_S = M_L$ schneiden, vgl. Figur 1.

Zu beachten ist, dass bei der Bestimmung der Brennweiten $f_1$ (r) und $f_2$ (r) stets der radiale Abstand r von der Drehachse D der Positionsmesseinrichtung verwendet und dass diese Berechnung entlang der Scheitellinie der jeweiligen Achse erfolgt. Durch die vorstehend erwähnten Konstruktionsvorschriften für die einzelnen modifizierten Zylinderlinsen der beiden Linsengruppen 3, 4, wobei die Brennweiten $f_1$ (r) und $f_2$ (r) zu den gewünschten Abbildungsmaßstäben $\beta_1(r)$ und $\beta_2(r)$ führen müssen, wird sichergestellt, dass jedes Paar von Einzellinsen der beiden Linsengruppen 3, 4, das jeweils aus einer Linse der ersten Linsengruppe 3 und einer entlang der optischen Achse dahinter angeordneten Linse der zweiten Linsengruppe 4 besteht, ein zugehöriges, entzerrtes Teilbild eines Ringsegmentes 21 der kreisringförmig erstreckten Codespur 20 erzeugt. Diese einzelnen Teilbilder (rechteckförmige Abbildungen 21' der Ringsegmente 21) müssen aber gemäß den Figuren 3c und 3d derart zueinander positioniert und orientiert werden, dass ein durchgehendes, entlang einer Geraden erstrecktes, entzerrtes Gesamtbild 20' entsteht. Dazu müssen die nachfolgend anhand der Figuren 1 und 4b erläuterten weiteren Konstruktionsvorschriften eingehalten werden.

Die Lichtstrahlen, die von der Codespur 20 ausgehend auf die Scheitellinien 33a, 33b von Linsen 31 a, 31 b der ersten Linsengruppe 3 treffen, werden in Umfangsrichtung U nicht abgelenkt. Die für eine geradlinige Anordnung der Abbilder erforderliche Ablenkung in Umfangsrichtung, die durch den Vergrößerungsmaßstab $\beta(r)$ in jeder radialen Position r vorgegeben ist, muss durch den Versatz in Umfangsrichtung der Scheitellinien 43a, 43b der entsprechenden Linsen 41 a, 41 b der zweiten Linsengruppe 4 erreicht werden.

In Figur 4b sind dabei zwei Zellen 31 a, 41 a und 31 b, 41 b der Linsenanordnung 3, 4 dargestellt, wobei jede Zelle 31 a, 41 a bzw. 31 b, 41 b eine erste Linse 31 a bzw. 31 b aus der ersten Linsengruppe 3 und eine entlang der optischen Achse dahinter angeordnete zweite Linse 41 a bzw. 41 b aus der zweiten Linsengruppe 4 umfasst. In Figur 4b ist ferner für jede der Zellen 31 a, 41 a ein Objekt O (repräsentativ für einen Teil der abzubildenden Codespur 20) dargestellt, das über ein Zwischenbild (zwischen den beiden Linsen 31 a, 41 a bzw. 31 b, 41 b der jeweiligen Zelle) auf ein Bild O' abgebildet wird.

Wie anhand Figur 3c deutlich wird, sind im vorliegenden Ausführungsbeispiel die durch die erste Abbildung mit einem Abbildungsmaßstab $\beta(r) = r_0/r$ erzeugten Abbilder 21' (Zwischenbilder der Gesamtabbildung) für radiale Abstände $r < r_0$ von der Drehachse D der Positionsmesseinrichtung einander überlappend angeordnet, während sie für radiale Abstände $r > r_0$ voneinander beabstandet sind. Dementsprechend müssen die Zwischenbilder in dem Bereich unterhalb der mittleren Umfangslinie $r_0$ (d.h. für $r<r_0$) bezüglich der unverkippten, zentralen Referenzlinse nach außen versetzt werden, um eine überlappensfreie Aneinanderreihung zu erzielen. Umgekehrt müssen oberhalb der mittleren Umfangslinie $r_0$, d.h. für $r>r_0$, die entsprechenden Bereiche der rechteckförmigen Zwischenbilder 21' (vgl. Figur 3c) nach innen, zu dem zentralen Referenz-Abbild hin versetzt werden. Dies bedeutet, dass die Scheitellinien 43a, 43b der Linsen 41a, 41b der zweiten Linsengruppe - entlang der optischen Achse betrachtet - für $r<r_0$ bezüglich der entsprechenden Scheitellinien 33a, 33b der jeweils zugehörigen Linsen 31 a, 31 b in Umfangsrichtung nach außen verschoben sein müssen und für $r>r_0$ in Umfangsrichtung nach innen versetzt werden müssen. Dies wird dadurch erreicht, dass sich die Scheitellinien der Linsen der zweiten Linsengruppe 4 in einem Schnittpunkt $M_S$ schneiden, der in radialer Richtung von dem entsprechenden Schnittpunkt $M_S$ der Linsen der ersten Linsengruppe 3 beabstandet ist. Dabei fällt vorliegend der Schnittpunkt $M_S$ der Scheitellinien der Linsen der ersten Linsengruppe 3 mit dem Schnittpunkt der Linsenbegrenzungslinien $M_L$ und mit der Drehachse D der Positionsmesseinrichtung zusammen, vgl. Figur 1. Demgegenüber liegt der Schnittpunkt $M_S$ der Scheitellinien der Linsen der zweiten Linsengruppe 4 außerhalb der Drehachse, und zwar, von den entsprechenden Linsen der Linsengruppe 4 her gesehen, in radialer Richtung hinter der Drehachse D. Hierdurch lässt sich erreichen, dass sich die Scheitellinien 33a, 43a bzw. 33b, 43b der Linsen 31 a, 40a bzw. 31 b, 41 b einer Zelle - entlang der optischen Achse betrachtet - jeweils in einem Punkt mit dem Radius $r_0$ kreuzen, entsprechend der obigen Vorgabe für das Verschieben der Scheitellinien der Linsen der zweiten Linsengruppe 4 bezüglich der Scheitellinien der Linsen der ersten Linsengruppe in Umfangsrichtung nach außen oder nach innen, je nachdem, ob $r<r_0$ oder $r>r_0$.

Anhand der Schnittdarstellung in Figur 4b durch zwei Zellen 31a, 41a und 31 b, 41 b der Linsenanordnung 3, 4 für einen bestimmten Radius r wird der Versatz $\delta s_n$ bzw. $\delta s_{n-1}$ der Scheitellinien 43a, 43b der zweiten Linsen 41 a, 41 b der jeweiligen Zelle bezüglich der Scheitellinien 33a, 33b der ersten Linsen 31 a, 31 b der jeweiligen Zelle deutlich. Dieser Versatz ist für einen bestimmten Radius r jeweils abhängig von dem Abstand der entsprechenden Zelle von derjenigen Zelle, die zur Abbildung des als Referenzsegment dienenden, nicht zu verkippenden Zwischenbildes (entsprechend dem zentralen Zwischenbild 21' in Figur 3c) dient. Hieraus ergibt sich ein entsprechender Versatz des Abbildes O' eines Objektes O $\delta S_n$ bzw. $\delta S_{n-1}$, senkrecht zur optischen Achse bezüglich des jeweils abzubildenden Objektes O. Durch diesen radiusabhängigen Versatz der in Figur 3c dargestellten Zwischenbilder 21' nach innen (für große Radien) bzw. nach außen (für kleine Radien) erhält man schließlich die lineare Anordnung der rechteckförmigen Abbilder 21' entlang einer Geraden g, entsprechend Figur 3d.

Im Ergebnis verläuft für die n-te Zelle der Linsenanordnung 3, 4 - von derjenigen Zelle aus betrachtet, mittels der das als Referenzelement definierte, zentrale, nicht zu verkipppende rechteckförmige Zwischenbild 21' (vgl. Figur 3c) abgebildet wird - die Scheitellinie 43a der zweiten Linse 41 a genau entlang der Winkelhalbierenden von $n*\delta\varphi$ durch den Schnittpunkt aus der mittleren Umfangslinie bei $r = r_0$ und der Linie $\varphi = n* \delta\varphi$. Dies ist eine unmittelbare Folge des Abbildungsmaßstabes $\beta_2(r) = -1$ für die zweite Abbildung.

Liegt dem zweiten Abbildungsmaßstab $\beta_2(r) = c$ ein Wert $c \neq 1$ zugrunde, so müsste die Scheitellinien der jeweiligen zweiten Linse entlang einer Linie verlaufen, deren Neigung zwischen 0° und $n*\delta\varphi$ im Verhältnis c:1 steht. Falls der Abbildungsmaßstab $\beta_2(r)$ nicht konstant (radiusunabhängig) sein sollte, dann wäre die Scheitellinie der zweiten Linse nicht mehr als Gerade darzustellen, sondern würde entlang einer gekrümmten Linie verlaufen.

Weitere Konstruktionsvorschriften für die Linsenanordnung betreffen die Linsenbegrenzungslinien, vgl. die Linsenbegrenzungslinien 45 für die Linsen 41 der zweiten Linsengruppe 4 in Figur 4a. Für die Erzeugung einer definierten Abbildung der Codespur 20 auf dem fotoelektrischen Detektor 19 muss das Übersprechen zwischen benachbarten Zellen der Linsenanordnung (vgl. Figur 4b) verhindert werden. Das heißt, solche Lichtstrahlen, die zunächst eine erste Linse 31a einer Zelle 31a, 41a passieren, sollen anschließend zu der zweiten Linse 41 a derselben Zelle gelangen, nicht aber zu einer zweiten Linse 41 b einer benachbarten Zelle 31 b, 41 b. Ein Verschieben der Linsenbegrenzungslinien 45 (vgl. Figur 4a) der Linsen 41 der zweiten Linsengruppe relativ zu den Linsen der ersten Linsengruppe (entsprechend der vorstehend erläuterten Verschiebung der Scheitellinien der Linsen) würde das Übersprechen noch verstärken. Die Linsenbegrenzungslinien beider Linsengruppen sollten daher übereinstimmen, also - entlang der optischen Achse betrachtet - übereinander liegen und sich insbesondere nicht kreuzen. Dies bedeutet, dass die Schnittpunkte $M_L$ der Linsenbegrenzungslinien der ersten Linsengruppe 3 und der zweiten Linsengruppe 4 in radialer Richtung auf gleicher Höhe liegen. Vorliegend liegen beide Mittelpunkte $M_L$ auf der Drehachse D der Positionsmesseinrichtung. Es sind also entlang der radialen Richtung ausschließlich die Schnittpunkte $M_S$ der Scheitellinien der Linsen nicht aber die Schnittpunkte der Linsenbegrenzungslinien $M_L$ zueinander versetzt. Das heißt, bezüglich ihrer äußeren Begrenzungslinien sind die Linsen - bei Betrachtung entlang der optischen Achse, also senkrecht zur Erstreckungsebene 30, 40 der beiden Linsengruppen 3, 4 - deckungsgleich. Unterschiede bestehen lediglich in der Krümmung der Linsen der ersten und zweiten Linsengruppe 3, 4 aus der jeweiligen Ebene 30, 40 heraus und damit auch in dem Verlauf der entsprechenden Scheitellinien der Linsen.'

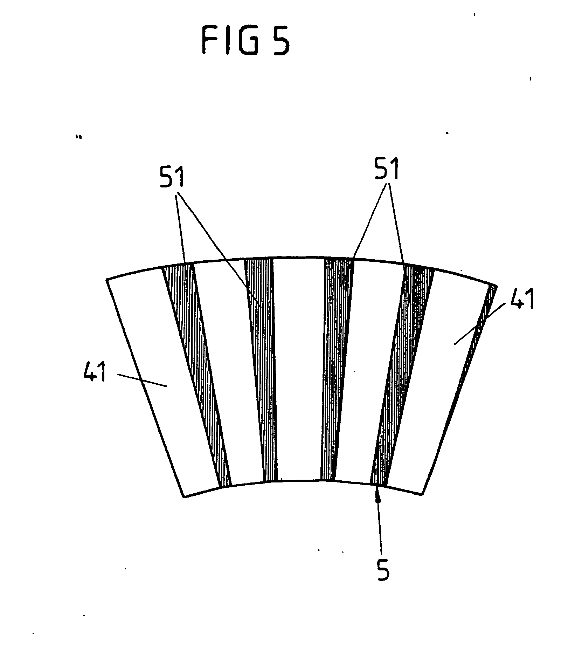

Für eine Reduktion des Übersprechens kann gemäß Figur 5 ferner eine Blendenstruktur 5 vorgesehen sein, bestehend aus Blendenelementen 51, die jeweils zwischen benachbarten Einzellinsen 41 der zweiten Linsengruppe 4 angeordnet sind, also die radial verlaufenden Linsenbegrenzungslinien überdecken.

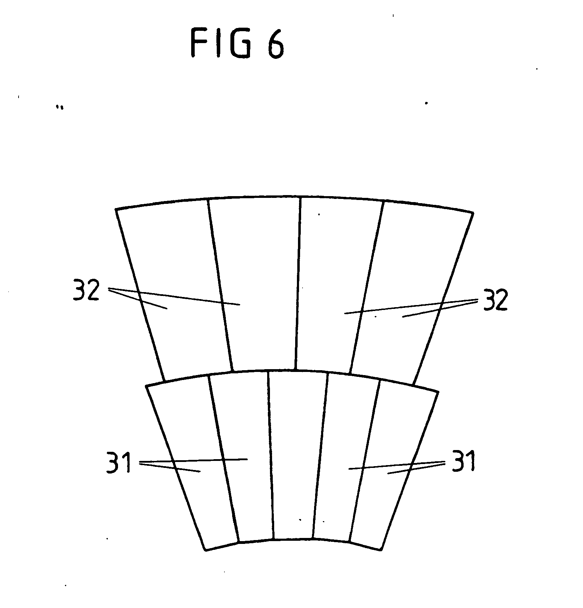

Um einen Helligkeitsabfall (Vignettieren) im Bereich der seitlichen, Linsenbegrenzungslinien zu vermeiden, können, wie anhand Figur 6 beispielhaft für Linsen 31, 32 der ersten Linsengruppe 3 dargestellt, der abzubildenden Codespur 20 Linsengruppen 3, 4 zugeordnet seien, die jeweils mehrere, in radialer Richtung nebeneinander angeordnete ringförmige Mikrolinsen-Arrays umfassen, welche jeweils um eine halbe azimutale Linsenbreite zueinander versetzt sind, so dass die Linsen-Mittelpunkte (Schwerpunkte) der einzelnen Linsen 31, 32 usw. entlang mehrerer (vorliegend entlang zweier) konzentrischer Kreislinien angeordnet sind.

Die vorstehend beschriebene Konstruktion der Linsengruppen kann sowohl mit refraktiven als auch mit diffraktiven Linsen ausgeführt werden. Hierbei ist, z.B. mittels Prägetechnik, auch eine Kombination mehrstufiger diffraktiver Strukturen mit refraktiven Linsen niedriger Scheitelhöhe möglich. Als Träger der Linsengruppen dient vorzugsweise ein Kunststoffsubstrat.

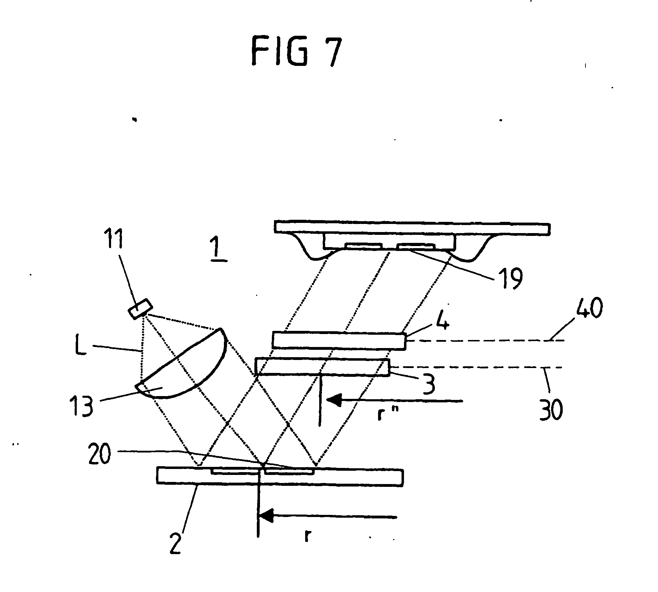

Die oben anhand einer im Durchlichtverfahren arbeitenden Positionsmesseinrichtung dargestellten Maßnahmen lassen sich in gleicher Weise auch bei im Auflichtverfahren arbeitenden Positionsmesssystemen anwenden. Bei solchen Positionsmesssystemen wird gemäß Figur 7 das von einer Lichtquelle 11 ausgesandte und mittels einer Kondensorlinse 13 parallelisierte Licht L von der entsprechenden Codespur 20 der Maßverkörperung 2 reflektiert und dann mittels einer aus zwei Linsengruppen 3, 4 bestehenden Linsenanordndung, auf den fotoelektrischen Detektor 19 abgebildet, wobei die beiden Linsengruppen 3, 4 in jeweils einer von zwei zueinander parallelen Ebenen 30, 40 angeordnet sind.

Dabei erfolgt die Beleuchtung der Maßverkörperung 2 vorzugsweise in axialradialer Richtung, so dass dann in dieser Richtung auch die Abbildung der entsprechenden Codespur 20 durch Parallelprojektion erfolgt. Ferner gestattet die genannte Beleuchtungsrichtung eine vergleichsweise große Freiheit bei der Wahl der auszuleuchtenden bzw. abzubildenden Fläche. Eine große Objektweite der ersten Abbildung verstärkt diesen Vorteil.

Für einen möglichst kompakten Aufbau der Anordnung sind kleine Beleuchtungswinkel zu wählen, wodurch die Geometrie der Anordnung sich dem ausführlich erläuterten Durchlichtfall annähert. Jedoch verbleibt ein gewisser Versatz einander entsprechender, entlang der optischen Achse hintereinander angeordneter Radien r, r'' usw. (bezogen auf die Drehachse des Winkelmesssystems), da die optische Achse nicht parallel zur Drehachse verläuft, sondern geneigt zu dieser, entsprechend dem Beleuchtungswinkel des parallelisierten Lichtes, das nicht senkrecht, sondern unter einem von der senkrechten abweichenden Beleuchtungswinkel auf die Maßverkörperung 2 fällt.

Untersuchungen an linearen Messsystemen (Längenmesssystemen), bei denen eine linear erstreckte Messteilung auf einen linear erstreckten fotoelektrischen Detektor abgebildet wird, haben gezeigt, dass eine optimale Abbildungsoptik erreicht wird, wenn sich die beiden Linsengruppen 3, 4 parallel zu der Maßverkörperung 2 und der strahlungsempfindlichen Oberfläche des fotoelektrischen Detektors 19 erstrecken. Es ist davon auszugehen, dass dies in entsprechender Weise für den Fall gilt, dass - wie hier - eine ringförmig erstreckte Messteilung 20 auf einen linear erstreckten fotoelektrischen Detektor 19 abgebildet wird.

Die vorstehend anhand der Figuren 1 bis 6 für das Durchlichtverfahren beschriebenen Maßnahmen können somit in entsprechender Weise bei einer im Auflichtverfahren arbeitenden Anordnung gemäß Figur 7 eingesetzt werden, besonders hinsichtlich des Verlaufs der Scheitellinien und der seitlichen, radial erstreckten Begrenzungslinien der Linsen, wobei den entlang der optischen Achse hintereinander angeordneten Punkten jeweils der gleiche Radius r zugeschrieben wird, obwohl die optische Achse nicht parallel zu der Drehachse D verläuft. Die radialen Koordinaten r der einzelnen Punkte beziehen sich dann also nicht mehr auf den Abstand von der Drehachse der Positionsmesseinrichtung, sondern vielmehr auf den Abstand von einer künstlich definierten Mittelachse, die parallel zu der optischen Achse verläuft, so dass entlang der optischen Achse hintereinander angeordnete Punkte die gleiche radiale Koordinate r aufweisen.

Wie anhand des Durchlichtverfahrens erläutert, werden auch hier hinsichtlich der Geometrie der Linsen lediglich die Scheitellinien und die Linsenbegrenzungslinien vorgegeben, während die Krümmung der Linsen unter den gegebenen Randbedingungen, insbesondere hinsichtlich des radiusabhängigen Abbildungsmaßstabes, mittels eines Optimierungsprogrammes (Computerprogramm) bestimmt wird.

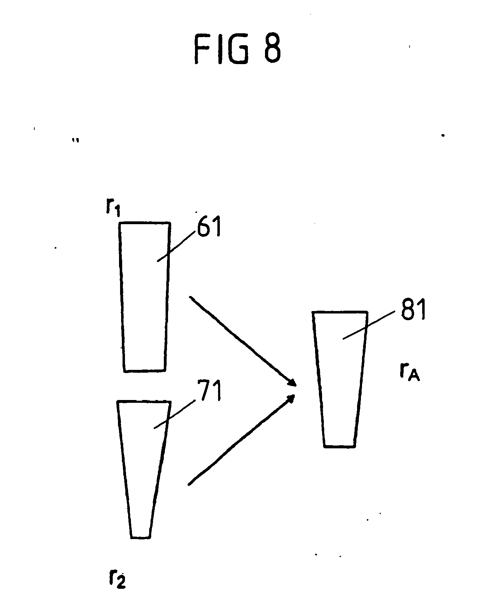

Die vorstehend beschriebenen Maßnahmen können gemäß Figur 8 ferner verwendet werden, um eine ringartig erstreckte Messteilung mit Ringsegmenten 61 mit einem vergleichsweise großen Krümmungsradius r, bzw. mit Ringsegmenten 71 mit einem vergleichsweise kleinen Krümmungsradius $r_2$ in ein ringartig erstrecktes Abbildung zu transformieren, dessen Segmente 81 einen von der abzubildenden Messteilung unterschiedlichen Krümmungsradius $r_A$ aufweisen. Im Fall einer Messteilung mit sehr großem Krümmungsradius ermöglicht dies eine Verkleinerung des Krümmungsradius und im Fall einer Messteilung mit sehr kleinem Krümmungsradius kann z.B. eine Vergrößerung des Krümmungsradius erreicht werden. Hierzu sind die Abbildungsmaßstäbe der beiden Teilabbildungen, die durch die beiden Linsengruppen 3, 4 definiert werden, so zu wählen, dass aus den einzelnen Ringsegmenten der Messteilung keine rechteckigen Segmente konstanter Breite, sondern vielmehr andere, ringartige Segmente mit abweichender Krümmung erzeugt werden.

Schließlich kann in Umkehrung der vorstehend beschriebenen Maßnahmen auch eine linear erstreckte Messteilung derart transformiert werden, dass auf dem fotoelektrischen Detektor ein ringartig erstrecktes Abbild erzeugt wird. Auch hierfür sind die Abbildungsmaßstäbe der beiden Teilabbildungen entsprechend zu wählen.

**Patentansprüche**

1.  Positionsmesseinrichtung mit

    - einer Maßverkörperung (2), die mindestens eine entlang einer Geraden oder entlang einer gekrümmten Linie erstreckte Messteilung (20) aufweist,
    - einer Abtasteinrichtung (1) zum Abtasten der Messteilung (20) mittels einer Lichtquelle (11),
    - einer Empfangseinheit (19) der Abtasteinrichtung (1), mittels der von einer Lichtquelle (11) ausgesandte und durch die Messteilung (20) modifizierte Lichtstrahlen zur Auswertung empfangbar sind und
    - einer zwischen der Maßverkörperung (2) und der Empfangseinheit (19) angeordneten, durch optische Linsen (31, 41) gebildeten Linsenanordnung (3, 4) zur Erzeugung eines definierten Abbildes der Messteilung (20) auf der Empfangseinheit (19), wobei die Linsenanordnung (3, 4) zur Erzeugung eines Abbildes (20') der Messteilung (20) ausgebildet ist, das sich entlang einer Linie (G) erstreckt, deren Krümmung verschieden von der Krümmung derjenigen Linie (R) ist, entlang der sich die Messteilung (20) erstreckt,

    **dadurch gekennzeichnet,**
    **dass** die Linsenanordnung (3, 4) eine Mehrzahl in einer Ebene (30, 40) angeordneter Linsen (31, 41) umfasst und dass die Ebene (30, 40) derart ausgerichtet ist, dass die durch die Messteilung (20) modifizierten Lichtstrahlen (L) die Ebene (30, 40) schneidet.

2.  Positionsmesseinrichtung nach Anspruch 1, **dadurch gekennzeichnet, dass** sich die Messteilung (20) entlang zumindest eines Teiles eines Ringes, insbesondere entlang eines Kreisringes, erstreckt.

3.  Positionsmesseinrichtung nach Anspruch 2, **dadurch gekennzeichnet, dass** sich das Abbild (20') der Messteilung (20) entlang einer Geraden (g) oder entlang zumindest eines Teiles eines Ringes, insbesondere eines Kreisringes erstreckt, dessen Krümmung von der Krümmung der Messteilung (20) verschieden ist.

4.  Positionsmesseinrichtung nach einem der Ansprüche 1 bis 3, **dadurch gekennzeichnet, dass** die Messteilung (20) durch ringartig hintereinander angeordnete Ringsegmente (21) gebildet wird, die jeweils eine definierte Ausdehnung in radialer Richtung aufweisen.

5.  Positionsmesseinrichtung nach Anspruch 4, **dadurch gekennzeichnet, dass** die Breite (a) der Ringsegmente (21), nämlich deren Ausdehnung in Umfangsrichtung (U), in radialer Richtung variiert, insbesondere in radialer Richtung nach außen zunimmt.

6.  Positionsmesseinrichtung nach Anspruch 4 oder 5, **dadurch gekennzeichnet, dass** die durch die Linsenanordnung (3, 4) auf der Empfangseinheit (19) gebildeten Abbilder (21') der Ringsegmente (21) jeweils eine konstante Breite (b), nämlich eine konstante Ausdehnung in Erstreckungsrichtung des Abbildes (20') aufweisen.

7.  Positionsmesseinrichtung nach Anspruch 4 oder 5, **dadurch gekennzeichnet, dass** die durch die Linsenanordnung (3, 4) auf der Empfangseinheit (19) gebildeten Abbilder der Segmente jeweils als Ringsegmente ausgebildet sind, deren als Ausdehnung in Umfangsrichtung definierte Breite in radialer Richtung variiert, insbesondere in radialer Richtung nach außen zunimmt.

8.  Positionsmesseinrichtung nach einem der vorhergehenden Ansprüche, **dadurch gekennzeichnet, dass** der Abbildungsmaßstab ($\beta$) der Linsenanordnung (3, 4) in radialer Richtung, bezogen auf eine Achse, insbesondere die Mittelachse (D) der sich entlang eines Ringes erstreckenden Messteilung (20) oder die Mittelachse ($M_L$-$M_L$) der Linsenanordnung, variiert.

9.  Positionsmesseinrichtung nach Anspruch 2 oder 3 und Anspruch 8, **dadurch gekennzeichnet, dass** der Abbildungsmaßstab ($\beta$) von einem Wert größer Eins in radialer Richtung nach Außen auf einen Wert kleiner Eins abnimmt.

10. Positionsmesseinrichtung nach einem der Ansprüche 8 oder 9, **dadurch gekennzeichnet, dass** die Brennweite (f) der einzelnen Linsen (31, 41) der Linsenanordnung (3, 4) in radialer Richtung bezogen auf die Achse (D) der Messteilung (20) variiert.

11. Positionsmesseinrichtung nach Anspruch 1, **dadurch gekennzeichnet, dass** die Linsenanordnung (3, 4) zwei Gruppen (3; 4) von Linsen umfasst, die jeweils einer von zwei parallel zueinander erstreckten Ebenen (30, 40) zugeordnet sind.

**12.** Positionsmesseinrichtung nach Anspruch 1, **dadurch gekennzeichnet, dass** die Linsen der beiden Gruppen (3, 4) jeweils paarweise zu einer Zelle (30a, 41a; 30b, 41b) zusammengefasst sind und dass die Linsen einer Zelle (31a, 41a; 31b, 41b) jeweils senkrecht zu den beiden Ebenen (30, 40) hintereinander angeordnet sind, wobei zumindest ein Teil der Lichtstrahlen (L), die eine erste Linse (31 a, 31 b) einer Zelle (31 a, 41 a; 31 b, 41 b) passiert haben, anschließend zu der zweiten Linse (41 a, 41 b) der Zelle (31 a, 41 a; 31 b, 41 b) gelangen.

**13.** Positionsmesseinrichtung nach Anspruch 1, **dadurch gekennzeichnet, dass** der Linsenanordnung (3, 4) eine Blendenstruktur (5) zugeordnet ist.

**14.** Positionsmesseinrichtung nach Anspruch 13, **dadurch gekennzeichnet, dass** die Blendenstruktur (5) in der Ebene (40) derjenigen Linsengruppe (4) angeordnet ist, die die Lichtstrahlen (L) zuletzt passieren.

**15.** Positionsmesseinrichtung nach Anspruch 13, **dadurch gekennzeichnet, dass** die Blendenstruktur zwischen den beiden Linsengruppen (3, 4) angeordnet ist.

**16.** Positionsmesseinrichtung nach Anspruch 13, **dadurch gekennzeichnet, dass** die Lichtstrahlen mittels der Blendenstruktur derart geführt werden, dass solche Lichtstrahlen (L), die die erste Linse (31a, 31b) einer Zelle (31a, 41a; 31 b, 41 b) passiert haben, nicht zu einer zweiten Linse (41 b, 41a) einer anderen Zelle (31b, 41 b; 31a, 41a) gelangen.

**17.** Positionsmesseinrichtung nach einem der Ansprüche 11 bis 16, **dadurch gekennzeichnet, dass** die beiden Gruppen (3, 4) von Linsen parallel zueinander ausgerichtet sind.

**18.** Positionsmesseinrichtung nach einem der Ansprüche 11 bis 17, **dadurch gekennzeichnet, dass** die Linsen-Mittelpunkte der einzelnen Linsen der beiden Linsengruppen (3, 4) in einem zweidimensionalen Raster bestehend aus mehreren Zeilen angeordnet sind.

**19.** Positionsmesseinrichtung nach einem der Ansprüche 11 bis 17, **dadurch gekennzeichnet, dass** die Linsen-Mittelpunkte der einzelnen Linsen der beiden Linsengruppen (3, 4) jeweils entlang mehrerer konzentrischer Kreislinien mit unterschiedlichen Radien liegen.

**20.** Positionsmesseinrichtung nach Anspruch 18, **dadurch gekennzeichnet, dass** die Zeilen des zweidimensionalen Rasters im Wesentlichen parallel zur Erstreckungsrichtung der Messteilung verlaufen und die verschiedenen Zeilen in der Erstreckungsrichtung der Messteilung zueinander versetzt angeordnet sind.

**21.** Positionsmesseinrichtung nach einem der Ansprüche 11 bis 20, **dadurch gekennzeichnet, dass** die einzelnen Linsen (31, 41) jeweils senkrecht zur Erstreckungsebene (30, 40) der jeweiligen Linsengruppe (3, 4) gewölbt sind und dass die Scheitellinien (43) der Linsen (31, 41) sich in radialer Richtung erstrecken.

**22.** Positionsmesseinrichtung nach Anspruch 21, **dadurch gekennzeichnet, dass** die Scheitellinien (43) sich in einem Punkt ($M_S$) schneiden.

**23.** Positionsmesseinrichtung nach Anspruch 17 und 22, **dadurch gekennzeichnet, dass** die Schnittpunkte ($M_S$) der Scheitellinien der beiden Linsengruppen (3, 4) in radialer Richtung voneinander beabstandet sind.

**24.** Positionsmesseinrichtung nach Anspruch 12 und 23, **dadurch gekennzeichnet, dass** in einer Zelle der Linsenanordnung (3, 4) die Scheitellinien der beiden Linsen dieser Zelle - entlang der optischen Achse betrachtet - deckungsgleich hintereinander angeordnet sind und dass in den weiteren Zellen (31a, 41a; 31b, 41 b) der Linsenanordnung (3, 4) die Scheitellinien (33a, 43a; 33b, 43b) der beiden jeweiligen Linsen (31a, 41a; 31b, 41b) senkrecht zur optischen Achse zueinander versetzt sind.

**25.** Positionsmesseinrichtung nach einem der Ansprüche 12 bis 24, **dadurch gekennzeichnet, dass** die seitlichen Begrenzungslinien (45), die die einzelnen Linsen (31, 41) in Umfangsrichtung (U) begrenzen, entlang der optischen Achse betrachtet, für die beiden Linsen (31a, 41a; 31b, 41b) einer Zelle (31a, 41a; 31b, 41b) deckungsgleich sind.

**Claims**

1. A position measuring device with

   - a material measure (2), which has at least one measuring grating (20) extended along a straight line or along a curved line,
   - a scanning device (1) for scanning the measuring grating (20) by means of a light source (11),
   - a receiver unit (19) of the scanning device (1), by means of which light beams transmitted from a light source (11) and modified by the measuring grating (20) can be received for evaluation, and
   - a lens arrangement (3, 4) arranged between the material measure (2) and the receiver unit (19) and formed from optical lenses (31, 41) to generate a defined image of the measuring grating (20) on the receiver unit (19), wherein

   the lens arrangement (3, 4) is designed to generate an image (20') of the measuring grating (20), which extends along a line (G), the curvature of which differs from the curvature of that line (R), along which the measuring grating (20) extends,
   **characterised in that** the lens arrangement (3, 4) comprises a plurality of lenses (31, 41) arranged in a plane (30, 40), and **in that** the plane (30, 40) is aligned such that the plane (30, 40) intersects the light beams (L) modified by the measuring grating (20).

2. The position measuring device according to Claim 1, **characterised in that** the measuring grating (20) extends along at least a part of a ring, in particular along a circular ring.

3. The position measuring device according to Claim 2,
   **characterised in that** the image (20') of the measuring grating (20) extends along a straight line (g) or along at least a part of a ring, in particular of a circular ring, whose curvature differs from the curvature of the measuring grating (20).

4. The position measuring device according to one of the Claims 1 to 3,
   **characterised in that** the measuring grating (20) is formed by means of ring-like ring segments (21) arranged one behind another, which in each case have a defined extent in a radial direction.

5. The position measuring device according to Claim 4,
   **characterised in that** the width (a) of the ring segments (21), namely their extent in a circumferential direction (U), varies in a radial direction, in particular increases in an outward radial direction.

6. The position measuring device according to Claim 4 or 5,
   **characterised in that** the images (21') of the ring segments (21) formed by the lens arrangement (3, 4) on the receiver unit (19), in each case have a constant width (b), namely a constant extent in the direction of extension of the image (20').

7. The position measuring device according to Claim 4 or 5,
   **characterised in that** the images of the segments formed by means of the lens arrangement (3, 4) on the receiver unit (19) are in each case developed as ring segments, whose width, defined as an extent in the circumferential direction, varies in a radial direction, in particular increases in an outward radial direction.

8. The position measuring device according to one of the previous claims,
   **characterised in that** the magnification ($\beta$) of the lens arrangement (3, 4) varies in a radial direction, referred to an axis, in particular the central axis (D) of the measuring grating (20) extending along a ring, or the central axis ($M_L$-$M_L$) of the lens arrangement.

9. The position measuring device according to Claim 2 or 3 and Claim 8,
   **characterised in that** the magnification ($\beta$) decreases in the outward radial direction from a value greater than one to a value less than one.

10. The position measuring device according to one of the Claims 8 or 9,
    **characterised in that** the focal length (f) of the individual lenses (31, 41) of the lens arrangement (3, 4) varies in a radial direction referred to the axis (D) of the measuring grating (20).

**11.** The position measuring device according to Claim 1, **characterised in that** the lens arrangement (3, 4) comprises two groups (3, 4) of lenses, which in each case are aligned with one of two planes (30, 40) extended in parallel with one another.

**12.** The position measuring device according to Claim 1,
**characterised in that** the lenses of the two groups (3, 4) in each case are combined in pairs into a cell (30a, 41a; 30b, 41b), and that the lenses of a cell (31a, 41a; 31b, 41b) are in each case arranged one behind another at right angles to the two planes (30, 40), wherein
at least a fraction of the light beams (L) that have passed through a first lens (31a, 31b) of a cell (31a, 41a; 31b, 41b) subsequently reach the second lens (41a, 41b) of the cell (31a, 41a; 31b, 41b).

**13.** The position measuring device according to Claim 1, **characterized in that** a diaphragm structure (5) is assigned to the lens arrangement (3, 4).

**14.** The position measuring device according to Claim 13, **characterised in that** the diaphragm structure (5) is arranged in the plane (40) of that lens group (4), which the light beams (L) lastly pass through.

**15.** The position measuring device according to Claim 13,
**characterized in that** the diaphragm structure (5) is arranged between the two lens groups (3, 4).

**16.** The position measuring device according to Claim 13,
**characterised in that** the light beams are guided by means of the diaphragm structure such that such light beams (L) that have passed through the first lens (31a, 31b) of a cell (31a, 41a; 31b, 41b) do not reach a second lens (41b, 41a) of another cell (31b, 41b; 31a, 41a).

**17.** The position measuring device according to one of the Claims 11 to 16,
**characterised in that** the two groups (3, 4) of lenses are aligned in parallel with one another.

**18.** The position measuring device according to one of the Claims 11 to 17,
**characterized in that** the lens centre points of the individual lenses of the two lens groups (3, 4) are arranged in a two-dimensional grid consisting of a plurality of rows.

**19.** The position measuring device according to one of the Claims 11 to 17,
**characterized in that** the lens centre points of the individual lenses of the two lens groups (3, 4) in each case lie along a plurality of concentric circular lines with different radii.

**20.** The position measuring device according to Claim 18,
**characterized in that** the rows of the two-dimensional grid run essentially parallel to the direction of extension of the measuring grating, and
**in that** the various rows are arranged offset from one another in the direction of extension of the measuring grating.

**21.** The position measuring device according to one of the Claims 11 to 20,
**characterised in that** the individual lenses (31, 41 are in each case curved at right angles to the plane of extension (40, 90) of the lens group (3, 4) in question, and
**in that** the vertex lines (43) of the lenses (31, 41) extend in a radial direction.

**22.** The position measuring device according to Claim 21, **characterised in that** the vertex lines (43) intersect at a point ($M_s$).

**23.** The position measuring device according to Claims 17 and 22,
**characterized in that** the intersection points ($M_s$) of the vertex lines of the two lens groups (3, 4) are separated from one another in a radial direction.

**24.** The position measuring device according to Claims 12 and 23,
**characterised in that** in a cell of the lens arrangement (3, 4) the vertex lines of the two lenses of this cell - viewed along the optical axis - are arranged congruently one behind another, and that in the other cells (31a, 41a; 31b, 41b) of the lens arrangement (3, 4) the vertex lines (33a, 43a; 33b, 43b) of the two lenses (31a, 41a; 31b, 41b) in question are arranged at right angles to the optical axis offset from one another.

**25.** The position measuring device according to one of the Claims 12 to 24, **characterised in that** the lateral boundary lines (45) that bound the individual lenses (31, 41) in a circumferential direction (U), viewed along the optical axis, are congruent for the two lenses (31a, 41a; 31b, 41b) of a cell (31a, 41a; 31b, 41b).

## Revendications

**1.** Dispositif de mesure de position, avec :

- un étalon (2) comportant au moins une graduation de mesure (20) s'étendant le long d'une ligne droite ou le long d'une ligne courbe,
- un dispositif de détection (11) pour la détection de la graduation de mesure (20) au moyen d'une source de lumière (11),
- une unité de réception (19) du dispositif de détection (1), au moyen de laquelle des rayons lumineux émis par la source de lumière (11) et modifiés par la graduation de mesure (20) peuvent être reçus pour une évaluation, et
- un ensemble de lentilles (3, 4) formé par des lentilles optiques (31, 41) et disposé entre un étalon (2) et l'unité de réception (19), pour produire une image définie de la graduation de mesure (20) sur l'unité de réception (19), l'ensemble de lentilles (3, 4) étant conçu pour produire une image (20') de la graduation de mesure (20) qui s'étend le long de la ligne (G), dont la courbe est différente de la courbe de la ligne (R), le long de laquelle s'étend la graduation de mesure (20),

**caractérisé en ce que**
l'ensemble de lentilles (3, 4) comprend une pluralité de lentilles (31, 41) disposées dans un plan (30, 40), et **en ce que** le plan (30, 40) est orienté de telle manière, que les rayons lumineux (L) modifiés par la graduation de mesure (20) coupent le plan (30, 40).

**2.** Dispositif de mesure de position selon la revendication 1, **caractérisé en ce que** la graduation de mesure (20) s'étend au moins le long d'une partie d'un anneau, en particulier le long d'un anneau circulaire.

**3.** Dispositif de mesure de position selon la revendication 2, **caractérisé en ce que** l'image (20') de la graduation de mesure (20) s'étend le long d'une ligne droite (g) ou au moins le long d'une partie d'un anneau, en particulier d'un anneau circulaire, dont la courbe est différente de la courbe de la graduation de mesure (20).

**4.** Dispositif de mesure de position selon l'une des revendications 1 à 3, **caractérisé en ce que** la graduation de mesure (20) est formée par des segments annulaires (21) disposés les uns à la suite des autres à la façon d'un anneau, les segments comportant chacun une extension en direction radiale.

**5.** Dispositif de mesure de position selon la revendication 4, **caractérisé en ce que** la largeur (a) des segments annulaires (21), notamment celle de leurs extensions en direction du pourtour (U), varie dans la direction radiale, et augmente notamment dans la direction radiale vers l'extérieur.

**6.** Dispositif de mesure de position selon la revendication 4 ou 5, **caractérisé en ce que** les images (21') des segments annulaires (21), formées par l'ensemble de lentilles (3, 4) sur l'unité de réception (19), présentent chacune une largeur constante (b), notamment une extension constante dans la direction de développement de l'image (20').

**7.** Dispositif de mesure de position selon la revendication 4 ou 5, **caractérisé en ce que** les images des segments, formées par l'ensemble de lentilles (3, 4) sur l'unité de réception (19), sont toutes conçues comme des segments annulaires, dont la largeur définie en tant qu'extension dans la direction du pourtour varie en direction radiale, et augmente notamment dans la direction radiale vers l'extérieur.

**8.** Dispositif de mesure de position selon l'une des revendications précédentes, **caractérisé en ce que** l'échelle de l'image (β) de l'ensemble de lentilles (3, 4) varie en direction radiale, par rapport à un axe, en particulier par rapport à l'axe médian (D) de la graduation de mesure (20) s'étendant le long d'un anneau ou à l'axe médian ($M_L$-$M_L$) de l'ensemble de lentilles (3, 4).

**9.** Dispositif de mesure de position selon la revendication 2 ou 3 et la revendication 8, **caractérisé en ce que** l'échelle de l'image (β) diminue en direction radiale vers l'extérieur, d'une valeur supérieure à un à une valeur inférieure à un.

**10.** Dispositif de mesure de position selon l'une des revendications 8 ou 9, **caractérisé en ce que** la distance focale (f) des différentes lentilles (31, 41) de l'ensemble de lentilles (3, 4) varie en direction radiale par rapport à l'axe (D).

**11.** Dispositif de mesure de position selon la revendication 1, **caractérisé en ce que** l'ensemble de lentilles (3, 4) comprend deux groupes (3, 4) de lentilles, dont chacun est attribué à l'un parmi deux plans (30, 40) s'étendant de façon parallèle l'un par rapport à l'autre.

**12.** Dispositif de mesure de position selon la revendication 1, **caractérisé en ce que** les lentilles des deux groupes (3, 4) sont respectivement rassemblées par paires en une cellule (30a, 41a ; 30b, 41b), et **en ce que** les lentilles d'une cellule (31a, 41a ; 31b, 41b) sont respectivement disposées les unes à la suite des autres, de façon verticale par rapport aux deux plans (30, 40), dans lequel au moins une partie des rayons lumineux (L) ayant traversé une première lentille (31a, 31b) d'une cellule (31a, 41a ; 31b, 41b) parviennent ensuite jusqu'à une deuxième lentille (41a, 41b) de la cellule (31a, 41a ; 31b, 41b).

**13.** Dispositif de mesure de position selon la revendication 1, **caractérisé en ce qu'**une structure de diaphragme (5) est attribuée à l'ensemble de lentilles (3, 4).

**14.** Dispositif de mesure de position selon la revendication 13, **caractérisé en ce que** dans le plan (40), la structure de diaphragme (5) est attribuée au groupe (4) de lentilles que les rayons lumineux (L) traversent en dernier.

**15.** Dispositif de mesure de position selon la revendication 13, **caractérisé en ce que** la structure de diaphragme est disposée entre les deux groupes (3, 4) de lentilles.

**16.** Dispositif de mesure de position selon la revendication 13, **caractérisé en ce que** les rayons lumineux sont guidés au moyen de la structure de diaphragme, de telle façon que les rayons lumineux (L) ayant traversé la première lentille (31a, 31b) d'une cellule (31a, 41a ; 31b, 41b) ne parviennent pas jusqu'à une deuxième lentille (41a, 41b) d'une autre cellule (31a, 41a ; 31b, 41b).

**17.** Dispositif de mesure de position selon l'une des revendications 11 à 16, **caractérisé en ce que** les deux groupes (3, 4) de lentilles sont orientés de façon parallèle l'un par rapport à l'autre.

**18.** Dispositif de mesure de position selon l'une des revendications 11 à 17, **caractérisé en ce que** les points centraux des différentes lentilles des deux groupes (3, 4) de lentilles sont disposés dans une matrice bidimensionnelle constituée de plusieurs lignes.

**19.** Dispositif de mesure de position selon l'une des revendications 11 à 17, **caractérisé en ce que** les points centraux des différentes lentilles des deux groupes (3, 4) de lentilles se trouvent chacun le long de plusieurs lignes circulaires concentriques avec des rayons différents.

**20.** Dispositif de mesure de position selon la revendication 18, **caractérisé en ce que** les lignes de la matrice bidimensionnelle s'étendent essentiellement parallèlement à la direction de développement de la graduation de mesure, et les différentes lignes dans la direction de développement de la graduation de mesure (20) sont disposées de façon décalée les unes par rapport aux autres.

**21.** Dispositif de mesure de position selon l'une des revendications 11 à 20, **caractérisé en ce que** les différentes lentilles (31, 41) sont toutes convexes perpendiculairement au plan de développement (30, 40) de chacun des groupes (3, 4) de lentilles, et **en ce que** les lignes de faîte (43) des lentilles (31, 41) s'étendent en direction radiale.

**22.** Dispositif de mesure de position selon la revendication 21, **caractérisé en ce que** les lignes de faîte (43) se coupent en un point ($M_S$).

**23.** Dispositif de mesure de position selon les revendications 17 et 22, **caractérisé en ce que** les points d'intersection ($M_S$) des lignes de faîte des deux groupes (3, 4) de lentilles sont espacés les uns des autres en direction radiale.

**24.** Dispositif de mesure de position selon les revendications 12 et 23, **caractérisé en ce que** dans une cellule de l'ensemble de lentilles (3, 4), les lignes de faîte des deux lentilles de cette cellule - de point de vue de l'axe optique - sont disposés l'une à la suite de l'autre de façon coïncidente, et **en ce que** dans les autres cellules (31a, 41a ; 31b, 41b) de l'ensemble de lentilles (3, 4), les lignes de faîte (33a, 43a ; 33B, 43b) de chacune des deux lentilles (31a, 41a ; 31b, 41b) sont décalées l'une par rapport à l'autre perpendiculairement à l'axe optique.

**25.** Dispositif de mesure de position selon l'une des revendications 12 à 24, **caractérisé en ce que** les lignes de délimitation latérales (45), qui délimitent les différentes lentilles (31, 41) dans la direction (U) du pourtour, coïncident pour les deux lentilles (31a, 41a ; 31b, 41b) d'une cellule (31a, 41a ; 31b, 41b), vu le long de l'axe optique.

# FIG 1

# FIG 2A

# FIG 2B

FIG 3A

FIG 3B

## FIG 3C

$r_0$

21'

H

21'

21'''

## FIG 3D

21'

20'

H

21'

g

# FIG 4A

FIG 4B

# FIG 5

# FIG 6

32

32

31

31

# FIG 7

# FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0801724 B1
- US 5486923 A
- US 4577101 A